# DEMANDE DE BREVET EUROPEEN

(11) **EP 0 872 398 A1**
(43) Date de publication de la demande: **21.10.1998**
(21) Numéro de dépôt: 98400633.8
(22) Date de dépôt: 18.03.1998
(51) Int. Cl.: B62B 1/12

(54) **Poussette pliante**

(30) Priorité: 15.04.1997 FR 9704622
(71) Demandeur: ATELIERS REUNIS CADDIE, F-67301 Schiltigheim Cedex (FR)
(72) Inventeur: Joseph, Alice, 67300 Schiltigheim (FR); Le Marchand, Alain, 67116 Reichstett (FR); Bapst, Patrick, 67230 Obenheim (FR)
(74) Mandataire: CABINET BONNET-THIRION

(57) **Abrégé**

Poussette pliante comportant un brancard (10), un support de plate-forme (30) et une plate-forme (20), ledit brancard (10) étant constitué de deux montants (11) reliés à l'une de leurs extrémité par une barre de manoeuvre (15) et portant, à leur autre extrémité, un axe de roues sur lequel est montée à rotation une roue (13), ledit support de plate-forme (30) étant constitué de deux bras (31) montés articulés (14), par leur partie supérieure, chacun sur un montant (11) du brancard (10), ladite plate-forme (20) étant, d'un côté, montée articulée sur les deux bras (31) au voisinage de leur partie inférieure et, de l'autre côté, montée coulissante le long des montants (11) du brancard (10), en sorte que la plate-forme (20) peut occuper au moins deux positions, une position d'utilisation dans laquelle la partie coulissante de la plate-forme (20) est proche des roues (13) en étant en appui sur une butée (12) solidaire des montants (11), et une position de non utilisation dans laquelle la partie coulissante de la plate-forme (20) est éloignée des roues (13), position qui correspond à la condition repliée de la poussette pour laquelle son encombrement est réduit.

## Description

La présente invention concerne une poussette pliante.

Plus précisément, l'invention concerne une poussette du genre de celles qui sont utilisées occasionnellement pour le transport d'objets lourds ou d'emplettes effectuées au marché ou dans des grands magasins, ou grandes surfaces. Une telle poussette est dès lors pliable de façon à être peu encombrante dans sa position non opérationnelle.

La présente invention a pour but de proposer une poussette pliante qui soit de fabrication simple, constituée de peu de pièces, légère, et d'un emploi facile.

Selon l'invention, une poussette pliante comporte un brancard, un support de plate-forme et une plate-forme, ledit brancard étant constitué de deux montants reliés à l'une de leurs extrémité par une barre de manoeuvre et portant, à leur autre extrémité, un axe de roues sur lequel est montée à rotation une roue, ledit support de plate-forme étant constitué de deux bras montés articulés, par leur partie supérieure, chacun sur un montant du brancard, ladite plate-forme étant, d'un côté, montée articulée sur les deux bras au voisinage de leur partie inférieure et, de l'autre côté, montée coulissante le long des montants du brancard, en sorte que la plate-forme peut occuper au moins deux positions, une position d'utilisation dans laquelle la partie coulissante de la plate-forme est proche des roues en étant en appui sur une butée solidaire des montants avec lesquels la plate-forme forme un angle important, et une position de non utilisation dans laquelle la partie coulissante de la plate-forme est éloignée des roues, les extrémités inférieures des montants et celles des bras étant rapprochées, position qui correspond à la condition repliée de la poussette pour laquelle son encombrement est réduit.

De préférence, les axes de roues sont constitués par les extrémités d'une tige d'axes reliant lesdites autres extrémités des montants, ladite tige d'axes constituant la butée avec laquelle coopère la plate-forme en position d'utilisation.

Avantageusement, un organe de verrouillage porté par la plate-forme et coopérant avec la tige d'axes permet de verrouiller la plate-forme en position d'utilisation.

De préférence, la plate-forme est montée articulée autour d'un axe dit de plate-forme reliant les deux bras au voisinage de leur partie inférieure.

Avantageusement, le brancard est réalisé à partir d'un tube plié en U ouvert vers le bas, dont les ailes constituent les montants et dont l'âme constitue la barre de manoeuvre.

Avantageusement, le brancard a une forme réglée galbée en définissant une surface dont la concavité est tournée vers l'extérieur.

De préférence, les deux bras sont les deux ailes d'un tube plié en U ouvert vers le haut ; avantageusement, les deux ailes du U définissent une surface réglée galbée dont la concavité est dirigée vers l'extérieur ; de préférence, l'âme du U est cintrée et constitue un pied pour la poussette ; avantageusement, l'âme cintrée du U est dans un plan formant un angle vers l'arrière avec les bras.

De préférence, la plate-forme est une grille.

Avantageusement, la grille comprend des longerons assemblés par au moins une traverse arrière dont les extrémités constituent des moyens de butée arrière adaptés à coopérer en butée avec la face arrière des montants ; de préférence, les extrémités avant d'au moins deux longerons sont enroulées autour d'un axe dit de plate-forme reliant les deux bras à leur partie inférieure.

Avantageusement, la grille est équipée de moyens de butée avant adaptés à coopérer en butée avec la face avant des montants.

De préférence, des moyens de verrouillage sont prévus pour verrouiller la plate-forme au moins dans sa position opérationnelle.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en perspective de la poussette selon l'invention en condition d'utilisation ;
- la figure 2 est une vue en perspective de la poussette selon l'invention en condition repliée ;
- la figure 3 est une vue en plan de la plate-forme de la poussette selon les figures 1 et 2, les éléments avec lesquels la plate-forme coopère, dans sa position d'utilisation, y étant partiellement représentés.
- la figure 4 est une vue de côté par rapport à la figure 3 ;
- les figures 5 et 6 sont analogues aux figures 3 et 4 et montrent une variante de plate-forme ;
- les figures 7 et 8 sont analogues aux figures 3 et 4 et montrent une autre variante de plate-forme ;

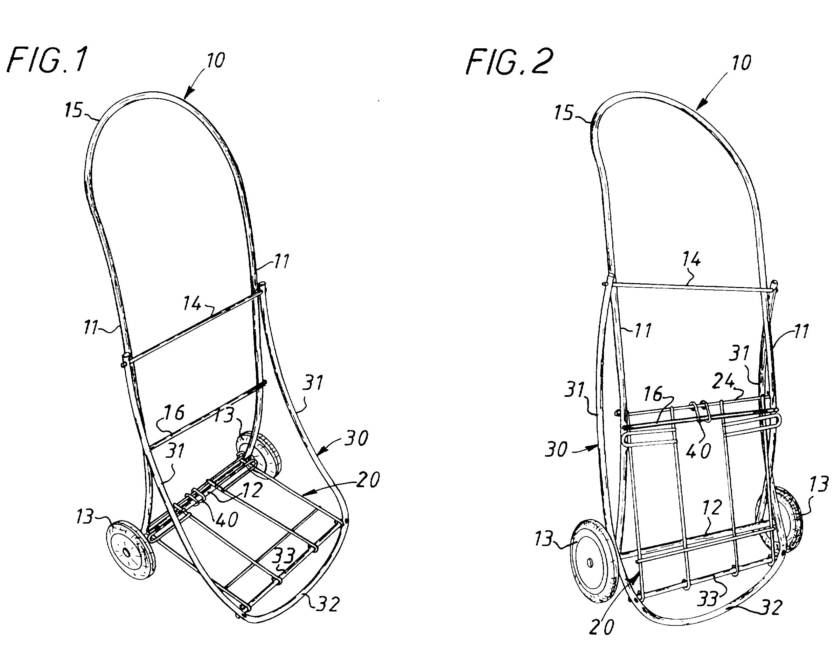

En se reportant aux figures 1 à 4, on voit que la poussette pliante selon l'invention comporte un brancard 10 réalisé ici à partir d'un tube plié en U ouvert vers le bas dont les ailes constituent deux montants 11 reliés à leur partie supérieure par une âme cintrée constituant une barre de manoeuvre 15.

A leur extrémité opposée à la barre de manoeuvre 15, les montants 11 sont reliés par une tige d'axes 12 s'étendant transversalement au delà des montants 11, de part et d'autre de ceux-ci, les parties de la tige d'axes 12 qui s'étendent au delà des montants 11 constituant des axes pour des roues 13 qui y sont montées à rotation.

La tige d'axes 12 est ici solidarisée aux montants 11 par soudage et s'étend, par rapport aux montants 11, du côté intérieur de la poussette.

Comme le montrent les figures 1 et 2, le brancard 10 a une forme galbée : il définit une surface réglée galbée ayant sa concavité tournée vers l'extérieur par rapport à la poussette, les montants 11 s'étendant parallèlement l'un par rapport à l'autre.

La poussette comporte également un support de plate-forme 30 réalisé ici également à partir d'un tube plié en U ouvert vers le haut dont les ailes constituent deux bras 31.

Les deux bras 31 sont montés articulés, par leur partie supérieure, chacun sur un montant 11 du brancard 10. Plus précisément, légèrement au dessus de leur mi-hauteur, les deux montants 11 sont reliés par une tige transversale 14, solidarisée ici par soudure aux montants 11 du côté intérieur de la poussette ; la tige transversale 14 dépasse de chaque côté des montants 11 et chaque partie dépassante reçoit à rotation l'extrémité supérieure de chaque bras 31 du support de plate-forme 30.

Les deux bras 31 sont reliés à leur partie inférieure par un axe 33 dit de plate-forme, ici solidarisé par soudage côté intérieur par rapport à la poussette.

Comme le montrent les figures 1 et 2, les deux bras 31 s'étendent parallèlement l'un à l'autre et définissent une surface réglée galbée ayant sa concavité tournée vers l'extérieur.

L'âme 32 du U constituant le support de plate-forme 30 est cintrée et constitue un pied pour la poussette. Ici, ladite âme cintrée 32 est plane et son plan forme un angle avec les bras 31 en sorte que, lorsque la poussette est au repos dans sa condition d'utilisation, ledit plan s'étend pratiquement dans un plan vertical.

La poussette comporte une plate-forme 20 ici constitué d'une grille.

La grille 20 comprend ici quatre longerons 29, deux longerons latéraux et deux longerons centraux, assemblés grâce à deux traverses, l'une avant 23, l'autre arrière 24 ; avantageusement, les traverses 23 et 24 sont solidarisées aux longerons 29 par soudage, à la partie inférieure des longerons 29, c'est-à-dire sous ceux-ci.

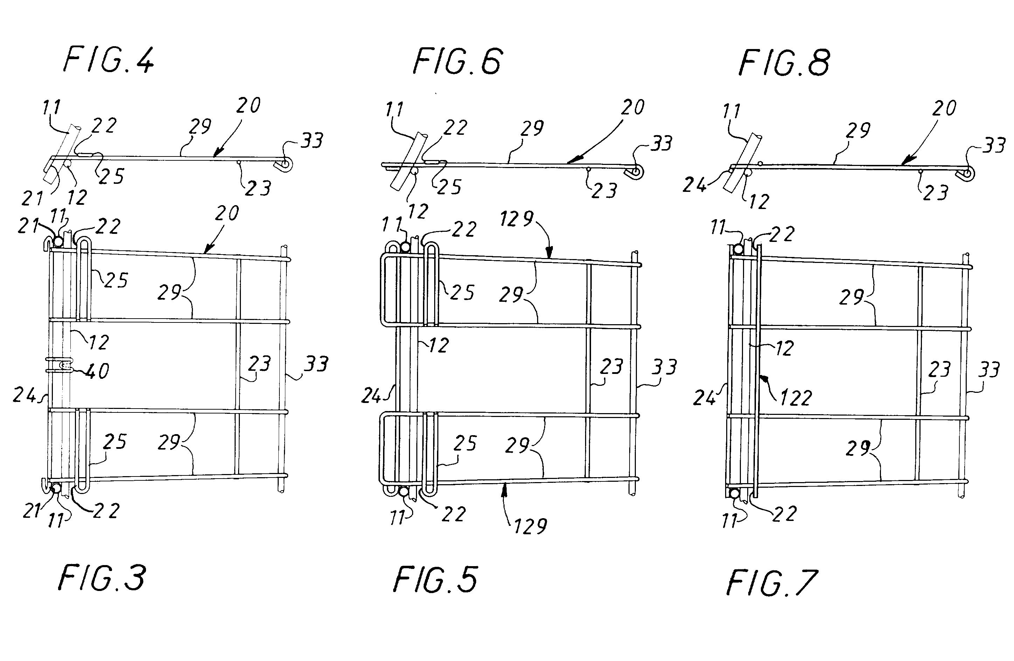

La traverse arrière 24 est placée au droit des extrémités arrière des longerons 29 tandis que la traverse avant 23 est placée à distance des extrémités avant des longerons 29 ; lesdites extrémités avant des longerons 29 sont enroulées autour de l'axe 33 de plate-forme du support de plate-forme 30, ceci réalisant le montage à rotation de la grille 20 autour dudit axe de plate-forme 33, comme cela est mieux visible sur la figure 4.

Du côté opposé à celui par lequel la grille 20 est montée articulée, celle-ci est montée coulissante le long des montants 11 du brancard 10.

Pour ce montage à coulissement, la traverse arrière 24 de la grille 20 a une longueur suffisante en sorte que ses extrémités puissent constituer des moyens de butée arrière 21, pour la grille 20, adaptés à coopérer en butée avec la face arrière des montants 11 du brancard 10. La grille 20 est également équipée de moyens de butée avant 22 adaptés à coopérer en butée avec la face avant des montants 11 ; ici, ces moyens de butée avant 22 sont constitués par l'extrémité avantageusement semi-circulaire d'épingles en U 25 ; l'extrémité des branches de chaque épingle 25 est solidarisée par soudage sur le longeron 29 central de gauche pour l'épingle de gauche, et sur le longeron 29 central de droite pour l'épingle de droite.

Les moyens de butée arrière 21 et avant 22 sont à une distance les uns des autres, mesurée longitudinalement, supérieure à l'épaisseur longitudinale, ici le diamètre, des montants 11, définissant ainsi un jeu longitudinal facilitant l'opération de coulissement de la grille 20 le long des montants 11 tandis qu'elle effectue un mouvement de rotation autour de l'axe de plate-forme 33.

Bien entendu, la longueur des moyens de butée arrière 21 et avant 22 dépendent de leur positionnement transversal, donc de celui de la grille 20 ; ici, le positionnement transversal est assuré par les longerons 29 latéraux qui sont à une distance transversale l'un de l'autre égale à celle qui sépare les montants 11 et/ou les bras 31, au jeu près de fonctionnement et de montage.

Comme cela est visible sur la figure 4, ici les moyens de butée arrière 21 sont constitués par les extrémités repliées en demi-boucle de la traverse arrière 24 ; chaque demi-boucle est plane et son plan fait un angle tel, avec le plan des longerons 29, que dans la position opérationnelle de la grille 20, figure 4, ce plan s'étend le long des montants 11, ceci assurant un bon contact de butée desdits moyens de butée arrière 21 avec lesdits montants 11.

La mise en oeuvre de la poussette pliante selon l'invention découle de la description ci-dessus.

Dans sa condition d'utilisation, au repos, montrée sur les figures 1, 3 et 4, la poussette repose sur le sol en trois points de contact constitués par les roues 13 et le pied 32 éloigné de celles-ci après pivotement des bras 31 autour de la tige transversale 14, la grille 20 ayant par sa partie arrière glissée, en coulissant, le long des montants 11, depuis sa condition de non utilisation montrée sur la figure 2 où elle s'étend verticalement ; dans sa position d'utilisation, la grille 20 repose, par l'extrémité arrière des longerons 29, sur la tige d'axes 12 sur laquelle elle est en appui. Plus précisément, en tenant la poussette par la barre de manoeuvre 15, dans la position où elle est représentée sur la figure 2, la grille 20 tombe par gravité vers sa position figure 1 et, dans son mouvement de coulissement, fait tourner les bras 31 autour de la tige transversale 14 en éloignant le pied 32 de la tige d'axes 12.

Il est possible, comme cela est représenté sur les figures, de verrouiller la grille 20 dans ses deux positions extrêmes ; pour ce faire, un organe de verrouillage 40, ici en forme de crochet articulé autour de la traverse arrière 24 de la grille 20, est adapté à coopérer en verrouillage soit avec la tige d'axes 12 dans la condition opérationnelle de la poussette, figures 1 et 3, soit avec une entretoise 16 filiforme, reliant transversalement les deux montants 11 du brancard 10, dans la condition repliée de la poussette, figure 2.

Bien entendu, dans le cas où un tel organe de verrouillage 40 est prévu, il est nécessaire de déverrouiller ledit organe pour la mise en oeuvre de la poussette décrite ci-dessus.

L'utilisation d'un tel organe de verrouillage présente en outre l'avantage de permettre de rattraper le jeu, en position d'utilisation de la grille 20, existant entre les montants 11 et les moyens de butée arrière 21 et avant 22, et de serrer en quelque sorte les montants 11 entre la tige d'axes 12 et les moyens de butée arrière 21, comme visible sur la figure 3 : on évite ainsi tout bruit en utilisation.

Sur les figures 5 et 6, les pièces ou parties de pièces identiques à celles des figures 3 et 4, ou jouant le même rôle, portent les mêmes références. Selon la variante de grille représentée sur ces figures, les demi-boucles d'extrémité de la traverse arrière 24 s'étendent dans un plan parallèle au plan des longerons 29 ; ici, les longerons sont groupés par paires ; un longeron latéral et le longeron central voisin sont les ailes d'une épingle 129 en U droit.

Sur les figures 7 et 8, les pièces ou parties de pièces identiques à celles des figures 3 et 4, ou jouant le même rôle, portent les mêmes références. Selon la variante de grille représentée sur ces figures, la traverse arrière 24 est une tige droite et ses extrémité ne sont pas conformées en demi-boucles ; ici, les moyens de butée avant 22 sont les extrémités d'une tige droite 122.

Bien entendu, d'autres variantes sont possibles.

Ainsi, les moyens de butée arrière peuvent être indépendants de la traverse arrière.

De même, les moyens de butée avant peuvent être localisés sur les longerons latéraux, voir même être une simple conformation par déformation de ceux-ci ; les moyens de butée arrière pourraient également n'être qu'une simple conformation des longerons latéraux.

Le brancard et le support de plate-forme de la variante décrite et représentée sont galbés : ils pourraient, l'un et/ou l'autre, être plans.

## Revendications

1. Poussette pliante comportant un brancard (10), un support de plate-forme (30) et une plate-forme (20), ledit brancard (10) étant constitué de deux montants (11) reliés à l'une de leurs extrémité par une barre de manoeuvre (15) et portant, à leur autre extrémité, un axe de roues sur lequel est montée à rotation une roue (13), ledit support de plate-forme (30) étant constitué de deux bras (31) montés articulés (14), par leur partie supérieure, chacun sur un montant (11) du brancard (10), ladite plate-forme (20) étant, d'un côté, montée articulée sur les deux bras (31) au voisinage de leur partie inférieure et, de l'autre côté, montée coulissante le long des montants (11) du brancard (10), en sorte que la plate-forme (20) peut occuper au moins deux positions, une position d'utilisation dans laquelle la partie coulissante de la plate-forme (20) est proche des roues (13) en étant en appui sur une butée (12) solidaire des montants (11) avec lesquels la plate-forme (20) forme un angle important, et une position de non utilisation dans laquelle la partie coulissante de la plate-forme (20) est éloignée des roues (13), les extrémités inférieures des montants (11) et celles des bras (31) étant rapprochées, position qui correspond à la condition repliée de la poussette pour laquelle son encombrement est réduit.

2. Poussette pliante selon la revendication 1, caractérisée par le fait que les axes de roues sont constitués par les extrémités d'une tige d'axes (12) reliant lesdites autres extrémités des montants (11), ladite tige d'axes (12) constituant la butée avec laquelle coopère la plate-forme (20) en position d'utilisation.

3. Poussette pliante selon la revendication 2, caractérisée par le fait qu'un organe de verrouillage (40) porté par la plate-forme (20) et coopérant avec la tige d'axes (12) permet de verrouiller la plate-forme (20) en position d'utilisation.

4. Poussette pliante selon l'une quelconque des revendications 1 à 3, caractérisée par le fait que la plate-forme (20) est montée articulée autour d'un axe (33) dit de plate-forme reliant les deux bras (31) au voisinage de leur partie inférieure.

5. Poussette pliante selon l'une quelconque des revendications 1 à 4, caractérisée par le fait que le brancard (10) est réalisé à partir d'un tube plié en U ouvert vers le bas, dont les ailes constituent les montants (11) et dont l'âme constitue la barre de manoeuvre (15).

6. Poussette pliante selon la revendication 5, caractérisée par le fait que le brancard (10) a une forme réglée galbée en définissant une surface dont la concavité est tournée vers l'extérieur.

7. Poussette pliante selon l'une quelconque des revendications 1 à 6, caractérisée par le fait que les deux bras (31) sont les deux ailes d'un tube plié en U ouvert vers le haut.

8. Poussette pliante selon la revendication 7, caractérisée par le fait que les deux ailes du U définissent une surface réglée galbée dont la concavité est dirigée vers l'extérieur.

9. Poussette pliante selon l'une des revendications 7 ou 8, caractérisée par le fait que l'âme du U est cintrée et constitue un pied (32) pour la poussette.

10. Poussette pliante selon la revendication 9, caractérisée par le fait que l'âme cintrée du U est dans un plan formant un angle vers l'arrière avec les bras (31).

11. Poussette pliante selon l'une quelconque des revendications 1 à 10, caractérisée par le fait que la plate-forme (20) est une grille.

12. Poussette pliante selon la revendication 11, caractérisée par le fait que la grille (20) comprend des longerons (29) assemblés par au moins une traverse arrière (24) dont les extrémités constituent des moyens de butée arrière (21) adaptés à coopérer en butée avec la face arrière des montants (11).

13. Poussette pliante selon la revendication 12, caractérisée par le fait que les extrémités avant d'au moins deux longerons (29) sont enroulées autour d'un axe (33) dit de plate-forme reliant les deux bras (31) à leur partie inférieure.

14. Poussette pliante selon l'une des revendications 11 à 13, caractérisée par le fait que la grille (20) est équipée de moyens de butée avant (22) adaptés à coopérer en butée avec la face avant des montants (11).

15. Poussette pliante selon l'une des revendications 1 à 14, caractérisée par le fait que des moyens de verrouillage (40) sont prévus pour verrouiller la plate-forme (20) au moins dans sa position opérationnelle.
